# EUROPÄISCHE PATENTSCHRIFT

(11) **EP 3 763 668 B1**
(45) Veröffentlichungstag und Bekanntmachung des Hinweises auf die Patenterteilung: **08.09.2021**
(21) Anmeldenummer: 19185612.9
(22) Anmeldetag: 10.07.2019
(51) Int. Cl.: B67D 1/12

(54) **VERFAHREN UND VORRICHTUNG ZUR AUSGABE EINES MIT EINEM GAS AUS EINEM GAS-DRUCKBEHÄLTER ANGEREICHERTEN GETRÄNKS**
METHOD AND DEVICE FOR DISPENSING A BEVERAGE ENRICHED WITH A GAS FROM A COMPRESSED GAS TANK
PROCÉDÉ ET DISPOSITIF DE DISTRIBUTION D'UNE BOISSON ENRICHIE EN UN GAZ À PARTIR D'UN RÉCIPIENT SOUS PRESSION À GAZ

(43) Veröffentlichungstag der Anmeldung: 13.01.2021
(73) Patentinhaber: FRANKE Kaffeemaschinen AG, 4663 Aarburg (CH)
(72) Erfinder: MÜLLER, Simon, 5037 Muhen (CH)
(74) Vertreter: Lemcke, Brommer & Partner Patentanwälte Partnerschaft mbB

(56) Entgegenhaltungen:
- EP-A1- 3 505 487
- DE-U1-202017 005 461
- GB-A- 2 129 775
- US-B2- 10 182 587

## Beschreibung

Die vorliegende Erfindung betrifft ein Verfahren zur Ausgabe eines Getränks, bei dem dem Getränk ein Gas aus einem Gasdruckbehälter, in welchem das Gas unter Druck gespeichert ist, beigemischt wird. Außerdem betrifft die Erfindung eine Getränkeausgabevorrichtung zur Ausgabe eines mit einem Gas angereicherten Getränks an einem Getränkeauslass, wobei die Vorrichtung einen Hochdruckanschluss zum Anschluss eines Gasdruckbehälters, in welchem das Gas unter Druck gespeichert ist, aufweist.

In letzter Zeit werden vermehrt neben klassischen, frisch gebrühten Kaffeegetränken wie Espresso, Cappuccino oder Filterkaffee Kaffeegetränke auf Grundlage eines vorgehaltenen Fertiggetränks oder Konzentrats angeboten. Hierunter fällt insbesondere kalt extrahierter Kaffee, sogenannter Cold-Brew-Coffee, der mit kaltem Wasser über mehrere Stunden angesetzt und kalt genossen wird. Bei einer besonderen Variante wird ein solches Kaffeekaltgetränk bei der Ausgabe mit Stickstoff versetzt. Hierdurch entstehen eine üppige Schaumkrone sowie ein dichtes, cremiges Mundgefühl, ähnlich einem mit Stickstoff angereicherten dunklen Starkbier (Guinness). Am Markt hat sich ein solches Kaffeegetränk unter der englischsprachigen Bezeichnung Nitro Cold Brew Coffee etabliert.

Nach dem derzeit praktizierten Verfahren wird hierzu dem Kaffeegetränk bei der Ausgabe über eine Art Zapfanlage Stickstoff aus einer Hochdruckgasflasche injiziert. Die hierzu verwendeten "Zapfgeräte" werden als Einzelgeräte bereitgestellt und müssen an den Verkaufsständen zusätzlich vorgehalten und aufgestellt werden. Dies ist platz- und kostenaufwendig. Eine Integration in vorhandene Kaffeevollautomaten für den Gastronomiebereich ist hierbei nicht möglich oder angedacht.

Eine manuelle Zapfanlage, wie sie in englischen Pubs typischerweise verwendet wird, ist in der GB 2 129 775 A beschrieben. Bei der dort gezeigten Zapfanlage wird Bier über eine manuelle Kolbenpumpe gefördert, wobei dem Bier saugseitig der Kolbenpumpe Luft über ein Luftventil zugeführt wird. Mit Hilfe einer Aufschäumscheibe im Zapfhahn wird das angesaugte Bier/Luft-Gemisch aufgeschäumt.

Die US 10,182,587 B2 beschreibt eine Schankanlage, bei der Getränke einschließlich kalten Kaffeegetränken mittels Gasdruck gefördert und wahlweise mit Gas angereichert (gas infused) werden können. Das Anreichern mit Gas findet in einer Aufschäumkammer statt, in welcher das unter Druck geförderte Getränk über einen Zerstäuber versprüht wird.

Die DE 20 2017 005461 U1 beschreibt eine Vorrichtung zur Ausgabe eines Kaffeegetränks gemäß des Oberbegriffs des Anspruchs 10.

Die Erfindung hat sich daher zur Aufgabe gestellt, ein alternatives, vereinfachtes Verfahren und eine entsprechende Vorrichtung zur Ausgabe von mit Gas aus einem Gasdruckbehälter angereicherten Getränken anzugeben, welches es insbesondere ermöglicht, diese an herkömmlichen bzw. hierfür ausgerüsteten Kaffeevollautomaten auszugeben.

Die Aufgabe wird hinsichtlich des Verfahrens gelöst durch die Merkmale des Anspruchs 1 und hinsichtlich der Vorrichtung durch die Merkmale des Anspruchs 10. Vorteilhafte Ausbildungen sind den abhängigen Ansprüchen zu entnehmen.

Bei einen Verfahren zur Ausgabe eines Getränks, bei dem dem Getränk ein Gas aus einem Gasdruckbehälter, in welchem das Gas unter Druck gespeichert ist, beigemischt wird, ist erfindungsgemäß vorgesehen, dass das Getränk mittels einer Pumpe aus einem Vorratsbehälter gefördert wird und dass das Gas bis zu einem Druck nahe des Umgebungsdrucks, insbesondere weniger als 0,5 bar, weiter bevorzugt weniger als 100 mbar und höchstbevorzugt weniger als 50 mbar über dem Umgebungsdruck, entspannt und saugseitig der Pumpe dem angesaugten Getränk zugeführt wird. Das Getränk kann insbesondere ein Kaffeegetränk sein. Das genannte Verfahren kann jedoch auch für andere Getränke wie etwa ein Teegetränk angewendet werden.

Die Einleitung des Gases in das Kaffeegetränk vor der Pumpe erfolgt somit im Wesentlichen drucklos. Die Durchmischung von Gas und Fertiggetränk erfolgt im Wesentlichen innerhalb der Pumpe. Als Gas kann insbesondere Stickstoff verwendet werden, der dem Getränk - insbesondere einem Kaffeegetränk - einen angenehmen cremigen Geschmack bzw. ein angenehm cremiges Mundgefühl verleiht.

Auf diese Weise kann unter Verwendung lediglich einer Pumpe aus dem im Vorratsbehälter vorgehaltenen Fertiggetränk oder Konzentrat ein mit Gas angereichertes Kaffeegetränk ausgegeben werden. Die erforderlichen Baugruppen lassen sich einfach und platzsparend in einem vorhandenen Gerät, wie etwa einem Kaffeevollautomaten oder einem zur Kühlung des Fertiggetränks vorgesehenen Kühlschranks unterbringen. Der Kühlschrank kann gleichermaßen für andere Zusätze, wie etwa Milch, Sahne, Crush-Eis oder dergleichen, genutzt werden. Auf diese Weise kann eine integrierte Getränkeausgabevorrichtung geschaffen werden.

Insbesondere ist im Rahmen der vorliegenden Erfindung vorgesehen, dass das Kaffeegetränk ein kalt extrahiertes Kaffeegetränk ist. Zur Zubereitung wird gemahlenes Kaffeepulver mit kaltem Wasser über mehrere Stunden angesetzt oder das kalte Wasser sehr langsam über mehrere Stunden unter Verwendung eines sogenannten Cold-Water-Drippers durch gemahlenes Kaffeepulver gefiltert. Dieser sogenannte Cold-Brew-Coffee ist sehr intensiv im Aroma, gut verträglich und im Gegensatz zu heiß gebrühtem Kaffee eine sehr gute Alternative bei heißem Wetter.

Zusätzlich kann der Vorratsbehälter gekühlt werden, sodass das Kaffeegetränk als Kaltgetränk ausgegeben wird.

Selbstverständlich ist auch eine Erwärmung des Kaffeegetränks bei der Ausgabe möglich, beispielsweise mittels eines in Flussrichtung hinter der Pumpe angeordneten Thermoblocks.

Wird das Kaffeegetränk als Kaltgetränk ausgegeben, so kann dem Kaffeegetränk bei der Ausgabe zusätzlich Eis zugegeben werden. Wird das Fertiggetränk in konzentrierter Form vorgehalten, so kann zusätzlich bei der Ausgabe Wasser beigefügt werden. Dies kann entweder vor der Pumpe oder hinter der Pumpe geschehen. Ebenso kann das Wasser separat am Getränkeauslass beigefügt werden. Auch die Beigabe weiterer Getränkezusätze, wie etwa Sirup, Sherry oder Likör, Milchschaum oder dergleichen, ist denkbar.

Bei einer bevorzugten Ausführungsform ist vorgesehen, dass das mit dem Gas angereicherte Getränk über ein in Förderrichtung hinter der Pumpe angeordnetes Gegendruckelement zu einem Getränkeauslass gefördert wird. Bei dem Gegendruckelement handelt es sich um einen Strömungswiderstand, gegen den die Pumpe das angesaugte Gemisch aus Kaffeegetränk und Luft anpumpen muss, sodass am Ausgang der Pumpe eine Druckerhöhung stattfindet. Diese Druckerhöhung führt zu einer noch stärkeren Durchmischung des Kaffeegetränk-Luftgemischs in der Pumpe, und somit zu einer cremigen bzw. schaumartigen Konsistenz des Kaffeegetränks.

Als Pumpe kommt insbesondere eine Zahnradpumpe in Betracht. Es hat sich herausgestellt, dass mit diesem Pumpentyp die beste fein-cremige bzw. schaumartige Konsistenz gelingt. Dies mag an einer besonders gründlichen Durchmischung des Luft-/Getränkegemischs durch die Zahnräder der Pumpe liegen.

Als Gegendruckelement kann entweder eine Engstelle, also eine Querschnittsverengung und anschließende Erweiterung, wie etwa eine Blende oder Drossel, zum Einsatz kommen. Das Gegendruckelement kann auch durch einen einfachen Druckschlauch mit verringertem Innenquerschnitt gebildet werden. Bevorzugt im Rahmen der Erfindung ist jedoch die Verwendung eines Mischers, insbesondere eines Wendelmischers, der keine Querschnittsverengung aufweist, sondern durch mehrfache Richtungsänderung als Fließwiderstand wirkt. Außerdem bewirkt ein solcher Mischer eine mehrfache Aufteilung und Zusammenführung des mit Gas angereicherten Flüssigkeitsstroms in mehrere Teilströme, sodass eine weitere Durchmischung und Verfeinerung des cremeartigen Kaffee-Luft-Gemischs erzielt wird. Eine weitere Form eines im Rahmen der Erfindung geeigneten Fließwiderstands ist ein sogenanntes Widerstandsdurchlasselement, welches aus einer Vielzahl labyrinthartig verzweigter Strömungswege gebildet wird und ebenfalls eine mehrfache Aufteilung des Fluidstroms in Teilströme, Zusammenführung und erneute Aufteilung bewirkt.

Bei einer weiteren bevorzugten Ausführungsform kann die zugeführte Gasmenge mithilfe eines Gasdosierventils dosiert werden. Als Gasdosierventil kann beispielsweise ein einfaches Nadelventil dienen, mit dem die Luftmenge durch Einstellen der Ansaugöffnung dosiert werden kann. Bevorzugt im Rahmen der vorliegenden Erfindung wird jedoch ein getaktetes Schließventil, gegebenenfalls in Kombination mit einer festen Blende, verwendet, welches in rascher Folge öffnet und schließt und somit die Ansaugöffnung freigibt und wieder verschließt. Zur Dosierung kann in diesem Fall das Tastverhältnis, also das Verhältnis zwischen der Öffnungszeit und der Wiederholperiode, verändert werden. Somit ist das Gasdosierventil im Mittel kürzer oder länger geöffnet, um weniger bzw. mehr Luft beizumischen. Über die Luftmenge kann insbesondere auch die Konsistenz des ausgegebenen Kaffeegetränks verändert werden.

Bei einer erfindungsgemäßen Getränkeausgabevorrichtung, die zur Ausgabe eines mit einem Gas angereicherten Getränks an einem Getränkeauslass ausgebildet ist und einen Hochdruckanschluss zum Anschluss eines Gasdruckbehälters, in welchem das Gas unter Druck gespeichert ist, aufweist, ist erfindungsgemäß eine Pumpe zur Förderung des Getränks über eine Ansaugleitung aus dem Vorratsbehälter zu dem Getränkeauslass vorgesehen, sowie ein eingangsseitig mit dem Hochdruckanschluss verbundener Druckminderer, welcher ausgebildet ist, das Gas bis zu einem Druck nahe des Umgebungsdrucks, insbesondere weniger als 0,5 bar, weiter bevorzugt weniger als 100 mbar, höchstbevorzugt weniger als 50 mbar über dem Umgebungsdruck, zu entspannen, und welcher ausgangsseitig mit einer in die Ansaugleitung mündende Gaszuführleitung verbunden ist, um das entspannte Gas dem angesaugten Getränk saugseitig der Pumpe zuzuführen.

In Förderrichtung hinter der Pumpe ist vorzugsweise ein Gegendruckelement angeordnet, über welches das mit dem Gas angereicherte Getränk zu dem Getränkeauslass gefördert wird. Als Gegendruckelement kann vorzugsweise eine Drossel oder ein statischer Mischer, insbesondere ein Wendelmischer verwendet werden. Als Pumpe dient bevorzugt eine Zahnradpumpe.

Des Weiteren ist bei einer bevorzugten Ausführungsform in der Gaszuführleitung ein Gasdosierventil, insbesondere ein getaktetes Schließventil, zur Dosierung des dem Kaffeegetränk zugeführten Gasvolumenstroms angeordnet.

Weitere Vorteile und Eigenschaften der Erfindung ergeben sich aus der nachfolgenden Beschreibung eines Ausführungsbeispiels anhand der Figuren. Es zeigen
- Figur 1: ein Wasserflussschema einer Vorrichtung zur Ausgabe von mit Gas angereichertem Kaffeegetränk und
- Figur 2: eine teilgeschnittene isometrische Darstellung eines im Ausführungsbeispiel verwendeten Gegendruckelements in Form eines Wendelmischers.

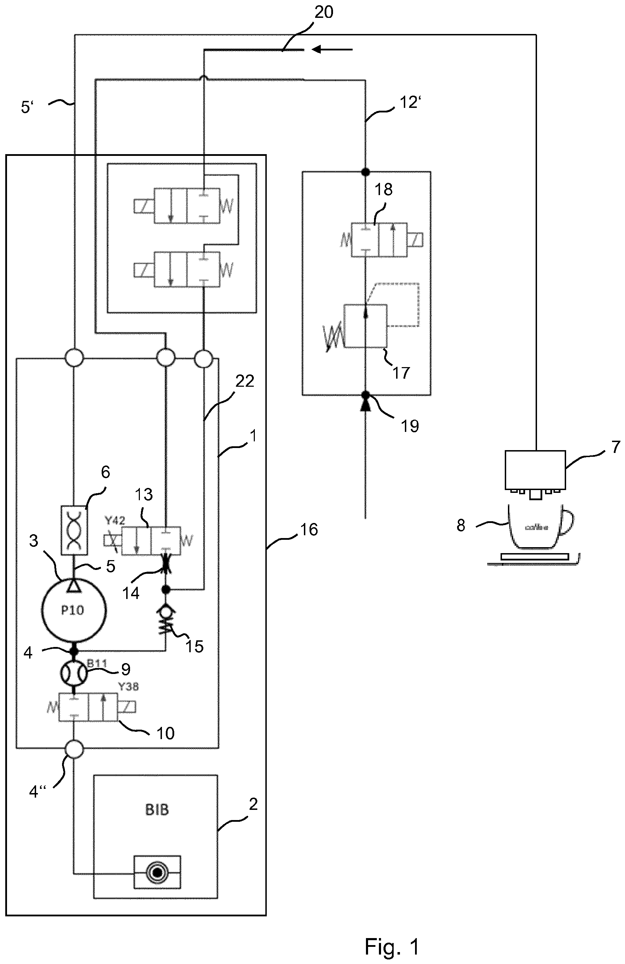

Die in Figur 1 in Form eines Wasserflussdiagramms dargestellte Vorrichtung umfasst einen Vorratsbehälter 2 mit einem kalt extrahierten Kaffeegetränk, eine elektrische Pumpe 3, die ansaugseitig über eine Ansaugleitung 4 mit dem Vorratsbehälter 2 verbunden ist, sowie ein über eine Auslassleitung 5 an der Druckseite der Pumpe 3 angeschlossenes Gegendruckelement 6 in Form eines Wendelmischers. Von dem Wendelmischer 6 führt die Auslassleitung 5' zu einem Getränkeauslass 7, an dem das mit Gas angereicherte kalte Kaffeegetränk in ein darunter positioniertes Trinkgefäß 8 ausgegeben wird. Der Getränkeauslass kann hierbei in den Auslasskopf eines Kaffeevollautomaten integriert sein, sodass das mit Gas angereicherte bzw. aufgeschäumte Kaffeegetränk als weitere Getränkeoption über den Kaffeevollautomaten ausgegeben werden kann.

In der Ansaugleitung 4 befindet sich ein Durchflussmesser 9, mit dem die Getränkemenge dosiert werden kann, sowie ein Schließventil 10, welches zu Beginn eines Getränkebezugs geöffnet und nach Beendigung des Getränkebezugs geschlossen wird, um ein Rückfließen noch in der Leitung 4 befindlichen Fluids zu verhindern. In die Ansaugleitung 4 mündet eine Gaszuführleitung 12. In der Gaszuführleitung 12 befinden sich ein Gasdosierventil 13, eine festen Blende 14 und ein Rückschlagventil 15. Das Gasdosierventil 13 ist im Ausführungsbeispiel als getaktetes Luftventil, also als in schneller Folge, intermittierend öffnend und schließend betriebenes Schaltventil ausgeführt. Die Frequenz, mit der das Luftventil betrieben wird, kann hierbei im Bereich zwischen 10 und 30 Hz liegen. Das Rückschlagventil 15 dient lediglich dazu, ein Eindringen von Flüssigkeit in die Luftzuführleitung zu begrenzen bzw. zu verhindern.

Die Pumpe 3, das Gegendruckelement 6, der Durchflussmesser 9 und das Gasdosierventil 13 sind zu einem Pumpenmodul bzw. einer Pumpenbaugruppe 1 zusammengefasst. Diese enthält außerdem das Schließventil 10 in der Zuführleitung 4 sowie das Rückschlagventil 15 und die Blende 14 in der Gaszuführleitung 12.

Pumpenmodul 1 und Vorratsbehälter 2 sind in einem Kühlschrank 16 angeordnet. Der Vorratsbehälter 2 ist hier als Einwegbehälter mit einem in einem Karton befindlichen Schlauch (BiB: Bag in Box) ausgebildet. Außerhalb des Kühlschranks 16 sind an die zu dem Pumpenmodul 1 führende Gaszuführleitung 12' ein Druckminderer 17 und ein Schließventil 18 angeschlossen. Über den Druckminderer 17 kann eingangsseitig ein hier nicht gezeigter Gasdruckbehälter, etwa eine herkömmliche Gasflasche mit ca. 200 bar Gasdruck, angeschlossen werden. Der Druckminderer 17 ist im Ausführungsbeispiel so ausgeführt bzw. eingestellt, dass er das unter Druck stehende Gas am Eingang auf einen Ausgangsdruck von lediglich 50 mbar reduziert, mit dem das Gas ansaugseitig der Pumpe in die Zuführleitung 4 eingeleitet wird. Bei einem Druckminderer (oder Druckreduzierventil) wird der Ausgangsdruck auf einen Steuereingang zugeführt und sorgt über einen Druckaufnehmer dafür, dass das ein Druckventil bei Überschreiten des vorgegebenen Soll-Ausgangsdrucks sperrt, bei unterscheiten wieder öffnet. Somit kann der Ausgangsdruck nicht über diesen voreingestellten Wert ansteigen. Als Druckaufnehmer kann hierbei ein Kolben oder eine Membran dienen.

Schließlich ist im Ausführungsbeispiel noch ein Spülanschluss 20 gezeigt, der über ein Schließventil 21 und eine Spülleitung 22 vor dem Rückschlagventil 15 in die Gaszuführleitung 12 einmündet. Nach einem Produktbezug kann über diese Spülleitung 22 ein Spülvorgang mit kaltem oder warmem Wasser durchgeführt werden. Hierzu wird das Ventil 10 am Produkteingang geschlossen, das Ventil 21 am Spülwasserzulauf 20 geöffnet und die Pumpe 3 in Betrieb gesetzt. Unter den Getränkeauslass 7 wird ein Auffanggefäß platziert, um das Spülwasser aufzufangen. Der Spülvorgang dient insbesondere dazu, das Rückschlagventil 15 freizuspülen, damit dieses nicht zusetzen und verstopfen kann. Ein im Ausführungsbeispiel weiteres, zu dem Ventil 21 parallel geschaltetes Spülventil 21' ist dafür vorgesehen, gegebenenfalls ein weiteres im Kühlschrank 16 gegebenenfalls untergebrachtes Pumpenmodul, welches hier nicht gezeigt ist, an dem Spülanschluss 20 anzuschließen.

Zum Ausgeben eines aufgeschäumten Cold-Brew-Kaffeegetränks wird das Ventil 10 am Produkteingang 4' geöffnet und die Pumpe 3 in Betrieb gesetzt. Somit wird aus dem Vorratsbehälter 2 dort vorgehaltenes Fertiggetränk angesaugt und über den Wendelmischer 6 zum Getränkeauslass 7 gefördert.

Gleichzeitig wird das Schließventil 18 am Gaseinlass 19 geöffnet und Stickstoff aus dem am Gasanschluss 19 angeschlossenen Gasdruckbehälter strömt über das Gasdosierventil 13, mit dem die zugeführte Gasmenge dosiert werden kann, die Blende 14 und das Rückschlagventil 15 zu der in die Ansaugleitung 4 einmündende Gaszuleitung 12. Die Pumpe 3 saugt somit neben dem Fertiggetränk aus dem Vorratsbehälter 2 zusätzlich Gas vom Gasanschluss 19 an. Aufgrund des Wendelmischers 6 wird am Pumpenausgang bzw. in der Pumpe 3 ein hoher Druck erzeugt wird. Dies führt zu einer Durchmischung des Luftgetränkegemischs in der Pumpe und erzeugt auf diese Weise ein cremiges bzw. schaumartiges, mit Gas angereichertes Fluid, das am Getränkeauslass 7 ausgegeben wird.

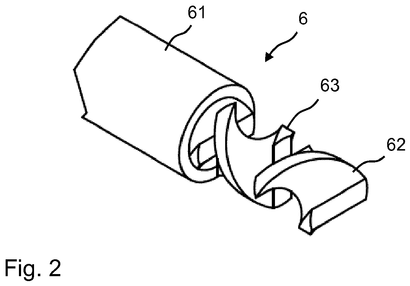

In Figur 2 ist ein als Gegendruckelement in Figur 1 eingesetzter Wendelmischer 6 dargestellt. Ein Wendelmischer ist ein sogenannter statischer Mischer, bei dem in einem rohrförmiges Gehäuse 61 mehrere hintereinander angeordnete, gegeneinander jeweils um 90° versetzte 180°-Wendel 62, 63 angeordnet sind. Außerdem haben die aufeinanderfolgenden Wendel jeweils eine gegenläufige Drehrichtung. Jeder Wendel teilt den Strom der durchströmenden Flüssigkeit in zwei Teilströme. Diese werden an jedem Übergang zum jeweils folgenden Wendel wiederum in zwei Teilströme aufgeteilt und jeweils mit Teilströmen aus dem vorangegangenen Wendel zusammengeführt. Auf diese Weise erfolgt eine Durchmischung des Flüssigkeitsstroms. Außerdem stellt der Wendelmischer einen weitgehend laminaren Strömungswiderstand dar, ohne dass hierbei der Durchflussquerschnitt verringert werden müsste. In Figur 2 ist das Gehäuse 61 des Mischers 6 ist teilweise aufgeschnitten gezeigt, um die im Inneren befindlichen, jeweils um 90° versetzten Wendelabschnitte 62, 63 zu erkennen.

## Patentansprüche

1. Verfahren zur Ausgabe eines Getränks, bei dem dem Getränk ein Gas aus einem Gasdruckbehälter, in welchem das Gas unter Druck gespeichert ist, beigemischt wird, wobei das Getränk mittels einer Pumpe (3) aus einem Vorratsbehälter (2) gefördert wird, **dadurch gekennzeichnet, dass** das Gas bis zu einem Druck von weniger als 0,5 bar, bevorzugt weniger als 100 mbar über dem Umgebungsdruck, entspannt und saugseitig der Pumpe (3) dem angesaugten Getränk zugeführt wird.

2. Verfahren nach Anspruch 1, bei dem das Getränk ein kalt extrahiertes Kaffeegetränk ist.

3. Verfahren nach einem der vorangehenden Ansprüche, bei dem dem Getränk Wasser und/oder Eis zugegeben wird, insbesondere bei dem das Getränk in dem Vorratsbehälter (2) in Form eines Getränkekonzentrats gespeichert ist und dem Getränkekonzentrat vor oder hinter der Pumpe Wasser zugegeben wird.

4. Verfahren nach einem der vorangehenden Ansprüche, bei dem es sich bei dem Gas um Stickstoff handelt.

5. Verfahren nach einem der vorangehenden Ansprüche, bei dem der Vorratsbehälter (2) gekühlt wird und das Getränk als Kaltgetränk ausgegeben wird.

6. Verfahren nach einem der vorangehenden Ansprüche, bei dem als Pumpe (3) eine Zahnradpumpe verwendet wird.

7. Verfahren nach einem der vorangehenden Ansprüche, bei dem das mit dem Gas angereicherte Getränk über ein in Förderrichtung hinter der Pumpe (3) angeordnetes Gegendruckelement (6) zu einem Getränkeauslass (7) gefördert wird.

8. Verfahren nach Anspruch 7, bei dem als Gegendruckelement (6) eine Drossel oder ein statischer Mischer, insbesondere Wendelmischer verwendet wird.

9. Verfahren nach einem der vorangehenden Ansprüche, bei dem in einer Zuleitung (12) für das dem angesaugten Getränk zugeführte Gas ein Gasdosierventil (13), insbesondere ein getaktetes Schließventil, angeordnet ist, mit dem das dem Getränk zugeführte Gasvolumen dosiert wird.

10. Getränkeausgabevorrichtung zur Ausgabe eines mit einem Gas angereicherten Getränks an einem Getränkeauslass (7), mit einem Hochdruckanschluss (19) zum Anschluss eines Gasdruckbehälters, in welchem das Gas unter Druck gespeichert ist, mit einer Pumpe (3) zur Förderung des Getränks über eine Ansaugleitung (4) aus dem Vorratsbehälter (2) zu dem Getränkeauslass (7), **gekennzeichnet durch**
einen eingangsseitig mit dem Hochdruckanschluss (19) verbundenen Druckminderer (17), welcher ausgebildet ist, das Gas bis zu einem Druck von weniger als 0,5 bar, bevorzugt weniger als 100 mbar über dem Umgebungsdruck, zu entspannen, und welcher ausgangsseitig mit einer in die die Ansaugleitung (4) mündende Gaszuführleitung (12, 12') verbunden ist, um das entspannte Gas dem angesaugten Getränk saugseitig der Pumpe (3) zuzuführen.

11. Getränkeausgabevorrichtung nach Anspruch 10, bei dem in Förderrichtung hinter der Pumpe (3) ein Gegendruckelement (6) angeordnet ist, über welches das mit dem Gas angereicherte Getränk zu dem Getränkeauslass (7) gefördert wird.

12. Getränkeausgabevorrichtung nach Anspruch11, bei dem als Gegendruckelement (6) eine Drossel oder ein statischer Mischer, insbesondere Wendelmischer verwendet wird.

13. Getränkeausgabevorrichtung nach einem der Ansprüche 10 bis 12, bei dem als Pumpe (3) eine Zahnradpumpe verwendet wird.

14. Getränkeausgabevorrichtung nach einem der Ansprüche 10 bis 13, bei dem in der Gaszuführleitung (12) ein Gasdosierventil (13), insbesondere ein getaktetes Schließventil, zur Dosierung des dem Getränk zugeführten Gasvolumens angeordnet ist.

## Claims

1. Method of dispensing a beverage, wherein the beverage is mixed with a gas from a pressurised gas container in which the gas is stored under pressure, the beverage being transported out of a storage container (2) by means of a pump (3), **characterised in that** the gas is reduced in pressure to a pressure of less than 0.5 bar, preferably less than 100 mbar, above ambient pressure and is supplied on the suction side of the pump (3) to the suctioned beverage.

2. Method according to claim 1, wherein the beverage is a cold-extracted coffee beverage.

3. Method according to either one of the preceding claims, wherein water and/or ice is added to the beverage, especially wherein the beverage is stored in the storage container (2) in the form of a beverage concentrate and water is added to the beverage concentrate upstream or downstream of the pump.

4. Method according to any one of the preceding claims, wherein the gas is nitrogen.

5. Method according to any one of the preceding claims, wherein the storage container (2) is cooled and the beverage is dispensed as a cold beverage.

6. Method according to any one of the preceding claims, wherein the pump (3) used is a gear pump.

7. Method according to any one of the preceding claims, wherein the gas-enriched beverage is transported to a beverage outlet (7) via a counter-pressure element (6) arranged downstream of the pump (3) in the transport direction.

8. Method according to claim 7, wherein the counter-pressure element (6) used is a throttle or a static mixer, especially a helical mixer.

9. Method according to any one of the preceding claims, wherein in a supply line (12) for the gas supplied to the suctioned beverage there is arranged a gas metering valve (13), especially a clocked closure valve, with which the gas volume supplied to the beverage is metered.

10. Beverage dispensing apparatus for dispensing a gas-enriched beverage at a beverage outlet (7), having a high-pressure connection (19) for connection of a pressurised gas container in which the gas is stored under pressure, having a pump (3) for transporting the beverage from the storage container (2) to the beverage outlet (7) via a suction line (4), **characterised by** a pressure-reducing device (17) connected on the input side to the high-pressure connection (19), which pressure-reducing device is configured to reduce the pressure of the gas to a pressure of less than 0.5 bar, preferably less than 100 mbar, above ambient pressure, and which is connected on the output side to a gas supply line (12, 12') leading to the suction line (4) in order to supply the pressure-reduced gas to the suctioned beverage on the suction side of the pump (3).

11. Beverage dispensing apparatus according to claim 10, wherein downstream of the pump (3) in the transport direction there is arranged a counter-pressure element (6) via which the gas-enriched beverage is transported to the beverage outlet (7).

12. Beverage dispensing apparatus according to claim 11, wherein the counter-pressure element (6) used is a throttle or a static mixer, especially a helical mixer.

13. Beverage dispensing apparatus according to any one of claims 10 to 12, wherein the pump (3) used is a gear pump.

14. Beverage dispensing apparatus according to any one of claims 10 to 13, wherein in the gas supply line (12) there is arranged a gas metering valve (13), especially a clocked closure valve, for metering the gas volume supplied to the beverage.

## Revendications

1. Procédé de distribution d'une boisson, dans lequel un gaz est incorporé dans la boisson à partir d'un récipient sous pression de gaz, dans lequel le gaz est stocké sous pression, la boisson étant transportée au moyen d'une pompe (3) hors d'un récipient de réserve (2), **caractérisé en ce que** le gaz est détendu jusqu'à une pression inférieure à 0,5 bar, de préférence inférieure à 100 mbar au-dessus de la pression ambiante, et introduit dans la boisson aspirée côté aspiration de la pompe (3).

2. Procédé selon la revendication 1, dans lequel la boisson est une boisson au café extraite à froid.

3. Procédé selon l'une quelconque des revendications précédentes, dans lequel de l'eau et/ou de la glace sont ajoutées à la boisson, notamment dans lequel la boisson est stockée dans le récipient de réserve (2) sous la forme d'un concentré de boisson et de l'eau est ajoutée au concentré de boisson avant ou après la pompe.

4. Procédé selon l'une quelconque des revendications précédentes, dans lequel le gaz consiste en de l'azote.

5. Procédé selon l'une quelconque des revendications précédentes, dans lequel le récipient de réserve (2) est refroidi et la boisson est distribuée en tant que boisson froide.

6. Procédé selon l'une quelconque des revendications précédentes, dans lequel une pompe à engrenages est utilisée en tant que pompe (3).

7. Procédé selon l'une quelconque des revendications précédentes, dans lequel la boisson enrichie avec le gaz est transportée jusqu'à une sortie de boisson (7) par l'intermédiaire d'un élément de contre-pression (6) agencé dans la direction de transport après la pompe (3) .

8. Procédé selon la revendication 7, dans lequel un étranglement ou un mélangeur statique, notamment un mélangeur hélicoïdal, est utilisé en tant qu'élément de contre-pression (6).

9. Procédé selon l'une quelconque des revendications précédentes, dans lequel une soupape de dosage de gaz (13), notamment une soupape de fermeture cadencée, est agencée dans une conduite d'alimentation (12) pour le gaz introduit dans la boisson aspirée, avec laquelle le volume de gaz introduit dans la boisson est dosé.

10. Dispositif de distribution de boisson pour la distribution d'une boisson enrichie avec un gaz au niveau d'une sortie de boisson (7), muni d'un raccordement haute pression (19) pour le raccordement d'un récipient sous pression de gaz, dans lequel le gaz est stocké sous pression, muni d'une pompe (3) pour le transport de la boisson par l'intermédiaire d'une conduite d'aspiration (4) hors du récipient de réserve (2) jusqu'à la sortie de boisson (7), **caractérisé par** un réducteur de pression (17) relié côté entrée avec le raccordement haute pression (19), qui est configuré pour détendre le gaz jusqu'à une pression inférieure à 0,5 bar, de préférence inférieure à 100 mbar au-dessus de la pression ambiante, et qui est relié côté sortie avec une conduite d'introduction de gaz (12, 12') débouchant dans la conduite d'aspiration (4), afin d'introduire le gaz détendu dans la boisson aspirée côté aspiration de la pompe (3).

11. Dispositif de distribution de boisson selon la revendication 10, dans lequel un élément de contre-pression (6) est agencé dans la direction de transport après la pompe (3), par l'intermédiaire duquel la boisson enrichie avec le gaz est transportée jusqu'à la sortie de boisson (7).

12. Dispositif de distribution de boisson selon la revendication 11, dans lequel un étranglement ou un mélangeur statique, notamment un mélangeur hélicoïdal, est utilisé en tant qu'élément de contre-pression (6).

13. Dispositif de distribution de boisson selon l'une quelconque des revendications 10 à 12, dans lequel une pompe à engrenages est utilisée en tant que pompe (3).

14. Dispositif de distribution de boisson selon l'une quelconque des revendications 10 à 13, dans lequel une soupape de dosage de gaz (13), notamment une soupape de fermeture cadencée, pour le dosage du volume de gaz introduit dans la boisson, est agencée dans la conduite d'introduction de gaz (12).
